(19) 

Europäisches Patentamt
European Patent Office
Office européen des brevets

(11) **EP 4 624 327 A1**

(12) **EUROPEAN PATENT APPLICATION**
published in accordance with Art. 153(4) EPC

(43) Date of publication:
**01.10.2025 Bulletin 2025/40**

(21) Application number: **23893420.2**

(22) Date of filing: **26.09.2023**

(51) International Patent Classification (IPC):
**B64C 13/30** *(2006.01)*    **B64U 40/00** *(2023.01)*

(52) Cooperative Patent Classification (CPC):
**B64C 13/30; B64U 40/00;** Y02T 50/40

(86) International application number:
**PCT/CN2023/121458**

(87) International publication number:
**WO 2024/109328 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 CN 202223141409 U**

(71) Applicant: **Autoflight (Kunshan) Co., Ltd.
Suzhou, Jiangsu 215345 (CN)**

(72) Inventors:
• **TIAN, Yu
Suzhou, Jiangsu 215345 (CN)**
• **DING, Yu
Suzhou, Jiangsu 215345 (CN)**

(74) Representative: **MERH-IP Matias Erny Reichl
Hoffmann
Patentanwälte PartG mbB
Paul-Heyse-Straße 29
80336 München (DE)**

(54) **LINKAGE ASSEMBLY, STEERING GEAR BUFFER STRUCTURE, AND AIRCRAFT**

(57)    The present invention belongs to the field of aircraft, disclosing a connecting rod assembly, servo buffer structure and aircraft. The connecting rod assembly includes a connecting rod body, which has a first end and a second end; The first and second ends are located on either side of the connecting rod body; The first end fixed connection has a first connecting member, and the first connecting member is actively connected to the first fixed seat; The second end fixed connection has a second connecting member , and the second connecting member is movably connected to the second fixed seat. The torsion rod of the present invention can reduce the bending deformation of the connecting rod during compression, and appropriately reduce the axial stiffness, so as not to greatly reduce the buckling performance of the connecting rod, and the structure is simple and easy to manufacture.

Figure 1

EP 4 624 327 A1

**Description**

FIELD OF THE DISCLOSURE

The present invention relates to the field of aircraft, specifically, to a connecting rod assembly, a servo buffer structure and an aircraft.

BACKGROUND OF THE INVENTION

Electric flight control system is widely used in UAVs, the most important component is the servo, which as the actuator of the UAV, can be used to drive the completion of various attitude transformations of the aircraft, and is an important part of the UAV flight control loop. Therefore, whether the servo can work normally has an important impact on the flight of the aircraft. The servo is mechanically connected to the drone through the servo linkage structure, and the steering force and torque are transmitted to the rudder surface.

In the current stage of the practice control of the UAV, most of the rudder surface arm of the UAV is connected to the servo through the connecting rod, because this connection is usually a rigid connection, during the flight, the disturbance airflow will cause interference to the UAV, the rudder surface around the axis will therefore appear swing vibration phenomenon, and the oscillation load on the rudder surface will directly act on the servo through the connecting rod, and then cause unnecessary fatigue damage or damage to the servo structure, and even have an impact on the flight mode of the UAV, which will adversely affect flight safety.

SUMMARY OF THE INVENTION

The object of the present invention is to provide a connecting rod assembly, a servo buffer structure and an aircraft, the structure is simple, and the purpose of buffer protection of the servo can be achieved.

To achieve this purpose, the present invention adopts the following technical solution:

The present invention is a connecting rod assembly, the connecting rod assembly comprising:

connecting rod body, the connecting rod body having a first end and a second end;
the first end and the second end are located on both sides of the connecting rod body, respectively;

The first end fixed connection has a first connecting member, and the first connecting member is movably connected to the first fixed seat;
The second end fixed connection has a second connecting member, and the second connecting member is movably connected to the second fixed seat.

Preferably, the connecting rod body further comprises a first straight rod, a first torsion bar, a transition bar, a second torsion bar, and a second straight rod connected sequentially;
wherein the free end of the first straight rod is fixed in the first connecting member, and the free end of the second straight rod is fixed in the second connecting member;
The other end of the first straight rod, the first torsion bar, the transition bar, the second torsion bar and the other end of the second straight rod are fixed and connected in turn.
Preferably, the first torsion bar and the second torsion bar are located on both sides of the axis direction of the transition bar, respectively.
Preferably, the first holder is provided with a plurality of through holes along its extension direction, and the first connecting member may be connected to the first holder by any of the through holes.
Preferably, the first connecting member is fixed by a pin with the first holder, and the second connecting member is connected with the second holder by a pin.
Preferably, the first straight rod, the first torsion bar, the transition bar, the second torsion bar and the second straight rod are all integrally formed.
Preferably, the first torsion bar and the second torsion bar are in the same horizontal plane or not.
Preferably, the first straight rod and the second straight rod are in the same straight line or not.
For this purpose, the present invention further adopts the following technical solutions:
The present invention has a servo buffer structure, comprising a connecting rod assembly, a servo body, and a rudder surface as described in the above scheme, the first fixed base of the connecting rod assembly is connected to the drive end of the servo body, and the servo body can drive the first fixed seat to swing;

the second holder is connected to the rudder surface ;
The first mounting base is able to drive the rudder surface to rotate through the connecting rod assembly.

For this purpose, the present invention further adopts the following technical solutions:
A vehicle of the present invention, comprising a servo buffer structure as described above, the aircraft further comprising a fuselage, the servo body disposed on the fuselage, and one end of the rudder surface rotating to the fuselage.
The beneficial effect of the present invention is that: the torsion bar in the present application can reduce the bending deformation of the connecting rod when compressed, and appropriately reduce the axial stiffness, so as not to greatly reduce the buckling performance of the connecting rod, and the structure is simple and easy to manufacture.

BRIEF DESCRIPTION OF DRAWINGS

FIG. 1 is a schematic diagram of the connecting rod assembly of the present invention;
FIG. 2 is a schematic diagram of the servo buffer structure of the present invention

DETAILED DESCRIPTION

In order to make the purpose, technical solution and advantages of the present invention clearer, the embodiments of the present invention will be elaborated in detail in conjunction with the accompanying drawings. However, those of ordinary skill in the art may understand that in various embodiments of the present invention, in order to better understand the reader of the present application, many technical details are proposed. However, even without these technical details and various changes and modifications based on the following embodiments, the technical solution claimed by each claim of the present application may be realized.

Unless the context otherwise requires, throughout the description and claims, the words "including" and its variants, such as "including" and "with" should be understood as having an open, inclusive meaning, i.e. shall be construed as "including, but not limited to".

The following will be combined with the accompanying drawings of each embodiment of the present invention in detail, in order to more clearly understand the purpose, characteristics and advantages of the present invention. It should be understood that the embodiments shown in the drawings are not a limitation of the scope of the present invention, but only to illustrate the substance of the technical solution of the present invention.

A reference to "one embodiment" or "one embodiment" throughout the description indicates that the particular feature, structure or feature described in the embodiment is included in at least one embodiment. Thus, the occurrence of "in one embodiment" or "in one embodiment" in various positions throughout the specification need not all refer to the same embodiment. Further, particular features, structures or features may be combined in any way in one or more embodiments.

The singular forms "I" and "the the" as used in the description and accompanying claims include plural references, unless expressly provided otherwise. It should be noted that the term "or" is usually used in the sense that it includes "and/or", unless expressly stated otherwise.

In the following description, in order to clearly demonstrate the structure and working mode of the present invention, a number of directional words will be used, but "front", "back", "left", "right", "outside", "inside", "outward", "inward", "up", "down" and other words should be understood as convenient terms, and should not be understood as qualified words. A first embodiment of the present application provides a connecting rod assembly.

A first embodiment of the present application provides a connecting rod assembly.

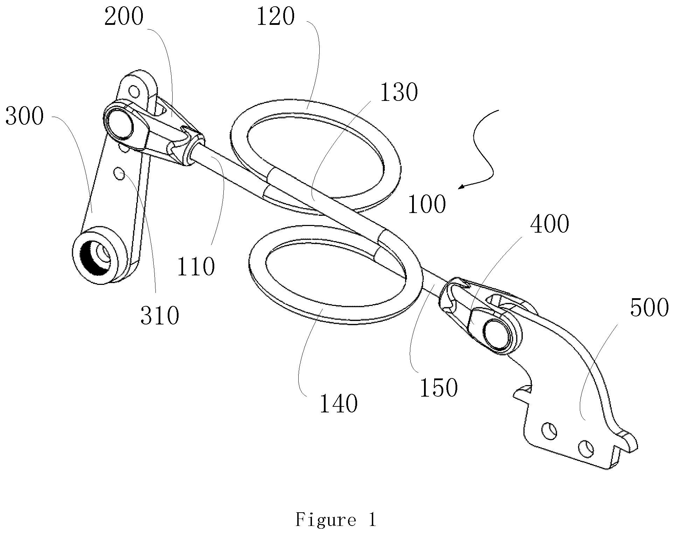

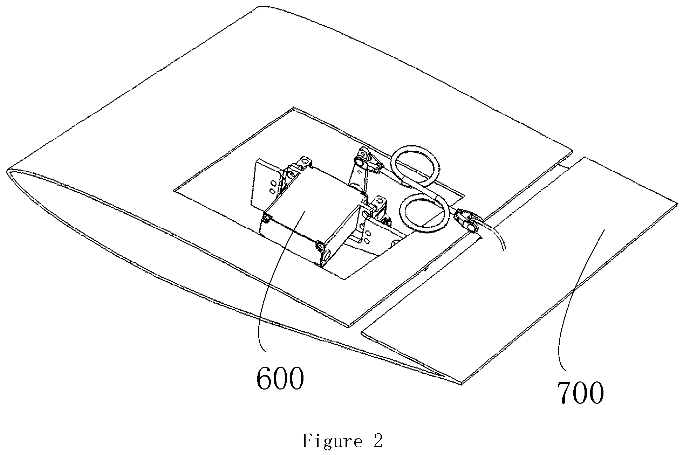

As shown in FIGS. 1-2, the connecting rod assembly specifically includes a connecting rod body 100, the connecting rod body 100 has a first end and a second end; The first and second ends are located on both sides of the connecting rod body 100; The first end fixed connection has a first connecting member 200, the first connecting member 200 is movably connected to the first mounting base 300; The second end fixed connection has a second connecting member 400, the second connecting member 400 is actively connected to the second mounting base 500.

Specifically, the connecting rod body 100 includes a fixed connection of the first straight rod 110, the first torsion bar 120, the transition bar 130, the second torsion bar 140 and the second straight rod 150; wherein the free end of the first straight rod 110 is fixed in the first connecting member 200, and the free end of the second straight rod 150 is fixed at the second connecting member 400; The other end of the first straight rod 110, the first torsion bar 120, the transition bar 130, the second torsion bar 140 and the other end of the second straight rod 150 are fixed in turn.

Further, the first torsion bar 120 and the second torsion bar 140 present an O-shape in the present embodiment, respectively symmetrically disposed on both sides of the transition bar 130, and are arranged sequentially spaced along the extension direction of the transition bar 130, the O-shaped torsion bar can effectively reduce the impact load acting on it, prolong the service life of the connecting rod.

Further, the first torsion bar 120 and the second torsion bar 140 are located on both sides of the axis direction of the transition bar 130. The first mounting base 300 is provided with a plurality of through-hole 310 along its extension direction, the first connecting member 200 may be connected to the first mounting base 300 through any through-hole 310.

Specifically, the first connecting member 200 is connected with the first mounting base 300 by a pin, and the second connecting member 400 is connected with the second mounting base 500 by a pin.

In order to make the connecting rod assembly have better strength, the first straight rod 110, the first torsion bar 120, the transition bar 130, the second torsion bar 140 and the second straight rod 150 in the present embodiment are all integrated molded.

Further, in the specific operation of the linkage, the first torsion bar 120 and the second torsion bar 140 are in or not on the same level; The first straight rod 110 and the second straight rod 150 are in the same straight line or not.

The second embodiment of the present application provides a servo buffer structure, including a connecting rod assembly as described in the above scheme, a servo body 600 and a rudder surface 700, wherein the first mounting base 300 of the connecting rod assembly is connected to the drive end of the servo body 600, and the servo body 600 can drive the first mounting base 300 to swing; The second mounting base 500 is connected to the rudder surface 700; The first mounting base 300 is able to drive the rudder surface 700 to rotate through the linkage assembly.

When used specifically, when the rudder surface is disturbed by airflow, the phenomenon of oscillation will occur. Assuming that the servo is a rigid body, the rudder surface energy Q is all absorbed by the axial deformation of the connecting rod assembly. Assuming that the stiffness of the linear connecting rod is $K_1$, the maximum axial deformation when loaded is $\Delta l_1$, the stiffness of the connecting rod assembly in the present embodiment is $K_2$, and the maximum axial deformation when loaded is $\Delta l_2$. Hooke's law shows that the potential energy of the connecting rod when compressed axially is

$$W = \frac{1}{2} K \times \Delta l^2$$

According to the law of conservation of energy

$$\frac{1}{2} K \times \Delta l^2 = Q$$

Yes $\Delta l = \sqrt{\frac{2Q}{K}}$, the maximum compression reaction force of the connecting rod is

$$F = K \times \Delta l = \sqrt{2KQ}$$

Apparently $K_1 > K_2$, so $F_1 > F_2$.

From the above mechanical analysis, it can be seen that the torsion bar structure in the connecting rod assembly in the present embodiment can effectively reduce the shock load of the rudder facing the servo and extend the service life of the servo. In addition, the figure-8 torsion bar can reduce the bending deformation of the connecting rod during compression, and appropriately reduce the axial stiffness, so as not to greatly reduce the buckling performance of the connecting rod, and the structure is simple and easy to manufacture.

The third embodiment of the present application provides an aircraft, the aircraft comprises a servo buffer structure described in the above scheme, the aircraft further comprises a fuselage, the servo body 600 is disposed on the fuselage, and one end of the rudder surface 700 rotates on the fuselage.

The above embodiments only illustrate the principle of the present application and its efficacy, and are not intended to limit the present application. Any person familiar with this technique may modify or modify the above embodiments without prejudice to the purpose of the application of this application. Thus, all equivalent modifications or alterations performed by persons with ordinary knowledge in the subject art without departing from the purpose disclosed in the present application shall still be covered by the claims of the present application.

## Claims

1. A connecting rod assembly, wherein the connecting rod assembly comprises:

   a connecting rod body (100), the connecting rod body (100) has a first end and a second end; the first end and the second end are located on both sides of the connecting rod body (100), respectively;
   a first end fixed connection has a first connecting member (200), the first connecting member (200) is movably connected to a first mounting base (300);
   a second end fixed connection has a second connecting member (400), the second connecting member (400) is movably connected to a second mounting base (500).

2. The connecting rod assembly according to claim 1, wherein the connecting rod body (100) further comprises a first straight rod (110), a first torsion bar (120), a transition bar (130), a second torsion bar (140) and a second straight rod (150) connected sequentially; wherein a free end of the first straight rod (110) is fixed in the first connecting member (200), and a free end of the second straight rod (150) is fixed in the second connecting member (400);
   the other end of the first straight rod (110), the first torsion bar (120), the transition bar (130), the second torsion bar (140) and the other end of the second straight rod (150) are fixed in turn.

3. The connecting rod assembly according to claim 2, wherein the first torsion bar (120) and the second torsion bar (140) are located on both sides of an axis direction of the transition bar (130), respectively.

4. The connecting rod assembly according to claim 1, wherein the first mounting base (300) is provided with a plurality of through-holes (310) along its extension direction, and the first connecting member (200) may be connected to the first mounting base (300) by any of the through-holes (310).

5. The connecting rod assembly according to claim 4, wherein the first connecting member (200) is connected with the first mounting base (300) by a pin, and the second connecting member (400) is connected with the second mounting base (500) by a pin.

6. The connecting rod assembly according to claim 2, wherein the first straight rod (110), the first torsion bar (120), the transition bar (130), the second torsion bar (140) and the second straight rod (150) are all integrated molded.

7. The connecting rod assembly according to claim 2, wherein the first torsion bar (120) and the second torsion bar (140) are in or are not on the same horizontal plane.

8. The connecting rod assembly according to claim 2, wherein the first straight rod (110) and the second straight rod (150) are or are not in the same straight line.

9. A servo buffer structure, comprising the connecting rod assembly according to any one of claims 1-8, a servo body (600), and a rudder surface (700),

   wherein the first mounting base (300) of the connecting rod assembly is connected to a drive end of the servo body (600), and the servo body (600) can drive the first mounting base (300) to swing;
   the second mounting base (500) is connected to the rudder surface (700);
   the first mounting base (300) is able to drive the rudder surface (700) to rotate through the connecting rod assembly.

10. An aircraft comprising the servo buffer structure according to claim 9, the aircraft further comprises a fuselage,
   wherein the servo body (600) is disposed on the fuselage, and one end of the rudder surface (700) rotates on the fuselage.

Figure 1

600

700

Figure 2

## INTERNATIONAL SEARCH REPORT

| International application No. |
|---|
| **PCT/CN2023/121458** |

| A. | CLASSIFICATION OF SUBJECT MATTER |
|---|---|

B64C13/30(2006.01)i; B64U40/00(2023.01)i

According to International Patent Classification (IPC) or to both national classification and IPC

| B. | FIELDS SEARCHED |
|---|---|

Minimum documentation searched (classification system followed by classification symbols)

IPC:B64C B64U

Documentation searched other than minimum documentation to the extent that such documents are included in the fields searched

Electronic data base consulted during the international search (name of data base and, where practicable, search terms used)

CNTXT, CJFD, ENTXTC: 舵面, 襟翼, 副翼, 杆, 扭, 弯, 弹性, 减震, 缓冲, 冲击 DWPI, ENTXT: rudder, flap, aileron, pole, twist, bend, spring, damp, amortize, impact.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 219056616 U (FENGFEI AVIATION TECHNOLOGY (KUNSHAN) CO., LTD.) 23 May 2023 (2023-05-23)<br>description, paragraphs 29-51, and figures 1-2 | 1-10 |
| PX | CN 218641064 U (FENGFEI AVIATION TECHNOLOGY (KUNSHAN) CO., LTD.) 17 March 2023 (2023-03-17)<br>description, paragraphs 26-37, and figures 1-2 | 1-10 |
| PX | CN 218892701 U (FENGFEI AVIATION TECHNOLOGY (KUNSHAN) CO., LTD.) 21 April 2023 (2023-04-21)<br>description, paragraphs 18-35, and figures 1-4 | 1-10 |
| X | CN 215622659 U (SICHUAN AOSSCI TECHNOLOGY CO., LTD. et al.) 25 January 2022 (2022-01-25)<br>description, paragraphs 35-51, and figures 1-3 | 1, 4 |
| Y | CN 215622659 U (SICHUAN AOSSCI TECHNOLOGY CO., LTD. et al.) 25 January 2022 (2022-01-25)<br>description, paragraphs 35-51, and figures 1-3 | 2-3, 6-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/121458** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 108905228 A (TIANJIN JINYAN MACHINERY DESIGN CO., LTD.) 30 November 2018 (2018-11-30)<br>    description, paragraphs 27-39, and figures 1-6 | 2-3, 6-10 |
| Y | CN 217260641 U (TIANJIN FEYE UAV TECHNOLOGY CO., LTD.) 23 August 2022 (2022-08-23)<br>    description, paragraphs 19-31, and figures 1-4 | 1-10 |
| Y | CN 209366445 U (GUANGDONG WEILI INTELLIGENT TECHNOLOGY CO., LTD.) 10 September 2019 (2019-09-10)<br>    description, paragraphs 20-29, and figures 1-4 | 1-10 |
| A | CN 111731469 A (BEIJING JINGDONG SHANGKE INFORMATION TECHNOLOGY CO., LTD. et al.) 02 October 2020 (2020-10-02)<br>    entire document | 1-10 |
| A | CN 207972790 U (YUNEEC ELECTRIC ENERGY SPORTS TECHNOLOGY (KUNSHAN) CO., LTD.) 16 October 2018 (2018-10-16)<br>    entire document | 1-10 |
| A | WO 2014142773 A1 (SIDORENKO YURI GRYGOROVYCH et al.) 18 September 2014 (2014-09-18)<br>    entire document | 1-10 |

Form PCT/ISA/210 (second sheet) (July 2022)

**INTERNATIONAL SEARCH REPORT**
Information on patent family members

International application No.

**PCT/CN2023/121458**

| Patent document cited in search report | | | Publication date (day/month/year) | Patent family member(s) | | | Publication date (day/month/year) |
|---|---|---|---|---|---|---|---|
| CN | 219056616 | U | 23 May 2023 | None | | | |
| CN | 218641064 | U | 17 March 2023 | None | | | |
| CN | 218892701 | U | 21 April 2023 | None | | | |
| CN | 215622659 | U | 25 January 2022 | None | | | |
| CN | 108905228 | A | 30 November 2018 | CN | 108905228 | B | 09 June 2020 |
| CN | 217260641 | U | 23 August 2022 | None | | | |
| CN | 209366445 | U | 10 September 2019 | None | | | |
| CN | 111731469 | A | 02 October 2020 | CN | 111731469 | B | 26 April 2022 |
| CN | 207972790 | U | 16 October 2018 | None | | | |
| WO | 2014142773 | A1 | 18 September 2014 | UA | 79830 | U | 25 April 2013 |

Form PCT/ISA/210 (patent family annex) (July 2022)